# EUROPÄISCHE PATENTSCHRIFT

(11) **EP 1 847 569 B1**
(45) Veröffentlichungstag und Bekanntmachung des Hinweises auf die Patenterteilung: **06.01.2010**
(21) Anmeldenummer: 06112935.9
(22) Anmeldetag: 21.04.2006
(51) Int. Cl.: C08L 77/00

(54) **Transparente Polyamid-Formmassen**
Transparent polyamide moulding compositions
Masses à mouler transparentes à base de polyamide

(43) Veröffentlichungstag der Anmeldung: 24.10.2007
(73) Patentinhaber: EMS-CHEMIE AG, 7013 Domat/Ems (CH)
(72) Erfinder: Bühler, Friedrich Severin, 7430 Thusis (CH); Lamberts, Nikolai, 7402 Bonaduz (CH); Hala, Ralf, 88161 Lindenberg (DE); Hoffmann, Botho, 7013 Domat / Ems (CH)
(74) Vertreter: Bremi, Tobias Hans

(56) Entgegenhaltungen:
- EP-A- 0 922 731
- DE-A1- 10 122 188
- US-A- 4 473 688
- US-A- 4 579 914
- US-A- 5 258 470

## Beschreibung

### TECHNISCHES GEBIET

Die vorliegende Erfindung betrifft Polyamid-Formmassen und daraus hergestellte hochtransparente und/oder dynamisch belastbare Gegenstände wie z.B. Materialien für Sportgeräte und -ausrüstung, ophthalmische Linsen, sowie Verfahren zur Herstellung solcher Gegenstände.

### STAND DER TECHNIK

Für die eingangs genannten Anwendungen verlangt der Markt hochtransparente Kunststoffe mit Lichttransmission über 90% und Haze-Werten von höchstens 5% bezogen auf Formteile mit 2 mm Wandstärke. Gleichzeitig soll das Formteil möglichst steif, kratzfest, abriebfest, chemikalienbeständig, zäh und dynamisch belastbar sein.

Steife und kratzfeste Materialien sind im allgemeinen wenig zäh und wenig dynamisch belastbar so beispielsweise Mineralglas. Zähe und dynamisch belastbare Materialien sind im Allgemeinen weich und elastisch wie beispielsweise Gummi. Häufig wird versucht, durch Mischen von glasartigen und gummiartigen Polymeren einen geeigneten Kompromiss einzustellen.

Spielt die Transparenz keine Rolle, kann die Aufgabe durch Compoundierung solcher Polymere erfolgen, die falls nötig einen geeigneten Verträglichkeitsvermittler enthalten, um die Verträglichkeit der beiden Komponenten zu verbessern.

In der US-A-2004/0242774 werden so z.B. elastomere Zusätze zu teilkristallinen Polyamiden zur Verbesserung der Hydrolysestabilität vorgeschlagen. Als Polyamid-Elastomere werden Polyetheramide mit 15-85% definierten Polyetherblöcken vorgeschlagen, die bis maximal 50% dem Polyamid zugegeben werden. Als Polyamid wird bevorzugt PA12 eingesetzt. Damit sind keine transparenten Formteile herstellbar.

Die EP-A-0389998 beschreibt die Zähmodifizierung von amorphen, insbesondere pigmentierten Polyamiden mit Polyetheresteramiden und Polyetheramiden. Die amorphen Polyamide enthalten aromatische Dicarbonsäuren und bilden mit PA12 beispielsweise keine transparenten Blends. Entsprechend enthalten die eingesetzten Polyetheramide und Polyetheresteramide Polyamidsegmente aus PA6 und PA66, die mit Polyamid 12 oder amorphen transparenten Polyamiden keine transparenten Produkte ergeben.

Die JP 62161854 beschreibt nicht-transparente Polyamidblends, bevorzugt auf Basis von PA6 und PA12, mit aliphatischen Polyesteramiden, die PA6-, PA11 - oder PA12-Segmente sowie Polycaprolacton-Segmente besitzen. Eine Verbesserung der Kerbschlagzähigkeit oder vorliegen von hochwertiger Transparenz wird nicht beschrieben.

Die US 5321099 beschreibt und beansprucht Blends auf Basis spezieller teilkristalliner Polyamide (abgeleitet von MDI, 4,4'-Diphenylmethan diisocyanat) und segmentierten Polyesteramiden. Solche Blends sind nicht transparent.

Auch in der US 4346024 werden nicht-transparente teilkristalline Polyamide (z.B. PA 66) mit Polyesteramiden compoundiert, wobei sich disperse Phasen bilden. Die Polyestersegmente der eingesetzten Polyesteramide beruhen u.a. auf dimerisierter Fettsäure.

In der EP-A-0 922 731 werden die Eigenschaften hinsichtlich Lichtdurchlässigkeit und Knickbruchbeständigkeit von Folien aus teilkristallinen Polyamiden (PA6, PA66) durch Zusatz von Polyesteramiden verbessert. Solche Folien aus derartigen Materialien werden zwar als transparent beschrieben, darunter ist aber eine Lichtdurchlässigkeit und nicht wirklich eine Transparenz zu verstehen, welche für die hier vorgeschlagenen Anwendungen geeignet wäre.

Wenn eine Mischung (Blend) die Herstellung hochwertig transparenter Formteile erlauben soll, müssen die Komponenten homogen mischbar oder sehr fein ineinander dispergiert sein, damit keine Lichtstreuung auftreten kann.

Die meisten Polymere sind nicht homogen mischbar. Polymermischungen, die hochwertig durchsichtige Formteile ergeben, sind sehr selten und solche die hochtransparente Formteile mit Haze-Werten von höchstens 5% erlauben, sind ebenfalls selten und jeweils nur empirisch auffindbar, weil eine Vorhersage des Misch-Resultates nicht möglich ist. Dies vor allem dann nicht, wenn sich die Komponenten in ihrem Aufbau und ihren Eigenschaften stark unterscheiden.

Transparente Polyamid-Blends beschreibt z.B. die US-A-2002/0173596. Sie beschreibt transparente, schlagzähe Polyamidblends, bestehend aus 50% teilkristallinem Polyamid, 0 - 40% Polyetheramid und 5 - 40% amorphem Polyamid und weiteren Kompatibilisatoren und Modifikatoren. Ausreichende Transparenz > 80% wird offenbar für Formteile mit 2 mm Dicke erreicht. Diese Formmasse soll die Herstellung von Folien mit ausreichender Transparenz erlauben, um als Oberbeläge für Skis eingesetzt zu werden. Das Dekor wird an der Ski zugewandten Seite der Folie aufgebracht und soll an der Oberseite erkennbar sein. Ob Formassen die Herstellung von Formteilen erlauben, deren Transparenz pro 2mm über 90 % liegt, ist der Offenbarung nicht zu entnehmen.

Die WO-A-2004/037898 beschreibt transparente Copolymere bestehend aus Polyamidblöcken und Polyethersegmenten. Die Polyethersegmente enthalten Polytetramethylenglykol mit einer mittleren Molmasse zwischen 200 und 4000 g/mol. Die Polyamidblöcke enthalten hauptsächlich teilkristalline, linear aliphatische Anteile und eine ausreichende Menge an Comonomeren, damit die Kristallinität reduziert wird. Dadurch entstehen Copolyamide mit einer Shore D Härte zwischen 40 - 70 und Polyetherblock-Anteilen von 10-40 Gew.-%. Solche Materialien besitzen einen sehr tiefen E-Modul und sind zur Herstellung von transparenten Gläsern, Scheiben, Sohlen etc. zu weich. Die gemessenen Transparenzwerte liegen mit 84% für eine Schichtdicke von 2 mm zu tief für viele hochwertigen Anwendungen. Zum Haze werden keine Angaben gemacht.

### DARSTELLUNG DER ERFINDUNG

Der Erfindung liegt demnach insbesondere die Aufgabe zugrunde, ein verbessertes Material zur Verwendung als Polyamid-Formmasse insbesondere für hochwertige optische Anwendungen vorzuschlagen. Es geht dabei um die Verbesserung einer Polyamidformmasse, enthaltend wenigstens ein transparentes Homopolyamid und/oder Copolyamid insbesondere bevorzugt in einem Gewichtsanteil von 70-99 Gew.-% sowie wenigstens ein weiteres Polymer insbesondere bevorzugt in einem Gewichtsanteil von 1-30 Gew.-% sowie optional weitere Farbstoffe und/oder Additive.

Die Lösung dieser Aufgabe wird insbesondere dadurch erreicht, dass es sich beim weiteren Polymer um ein Polyesteramid handelt, und dass die Lichttransmission einer aus der Polyamidformmasse hergestellten Platte einer Dicke von 2 mm wenigstens 88% beträgt.

Der Kern der Erfindung besteht somit darin, dass überraschenderweise herausgefunden wurde, dass für hochwertige Anwendungen, das heisst für hochwertige transparente Bauteile auf Basis von Polyamid die Zugabe von einem Polyesteramid die Transparenz der Basissubstanz (transparentes Homopolyamid und/oder Copolyamid) nicht negativ beeinflusst und zusätzlich weitere Eigenschaften wesentlich verbessern kann, wie insbesondere die mechanische Stabilität und/oder die dynamische Belastbarkeit.

Der Begriff transparente Polyamide (das heisst transparentes Homopolyamid und/oder Copolyamid), wie er in dieser Schrift verwendet wird, soll Polyamide oder Copolyamide respektive daraus gebildete Formmassen bezeichnen, deren Lichttransmission wenigstens 80%, insbesondere bevorzugt 90% beträgt, wenn das (Co)Polyamid (in reiner Form, d.h. ohne die oben angegebenen weiteren Bestandteile der erfindungsgemässen Formmasse) in Form eines Plättchens von 2mm Dicke vorliegt.

Der Wert der Lichttransmission ist dabei im Rahmen dieses Textes stets als bestimmt nach der Methode ASTM D1003 (Lichtart CIE-C) zu verstehen. Die Messung der Lichttransmission wurde dabei in den unten angeführten Experimenten auf einem Gerät mit dem Namen Haze Guard Plus der Firma BYK Gardner (DE) an Rundplatten 70x2 mm durchgeführt. Der Transmissionswert wird für den sichtbaren Wellenlängenbereich definiert nach CIE-C d.h. mit wesentlichen Intensitäten ca. zwischen 400 und 770 nm, angegeben. Die Rundplatten 70x2 mm werden z.B. dafür auf einer Arburg Spritzgussmaschine im polierten Werkzeug hergestellt, wobei die Zylindertemperatur zwischen 200 und 340 °C und die Werkzeugtemperatur zwischen 20 und 140 °C liegt.

Überraschenderweise zeigt es sich zudem, dass die Zugabe von Polyesteramid die möglichen Verarbeitungstemperaturen im Vergleich zum reinen transparenten Polyamid reduziert. Dies erlaubt eine schonendere Verarbeitung der Formmassen.

Weiterhin zeigt es sich, dass aus den vorgeschlagenen Polyamid Formmassen hergestellte Gegenstände bei einer Schichtdicke von 2 mm einen wesentlich niedrigeren Yellow-Index aufweisen.

Während Vergleichsbeispiele typischerweise einen Yellow-Index (ASTM D 1965, Lichtart C2, wiederum gemessen an Rundplatten 70x2 mm) im Bereich von wenigstens 5 zeigen, lassen sich mit den vorgeschlagenen Polyamid-Formmassen Platten einer Schichtdicke von 2 mm mit einem Yellow-Index von weniger als 3, bevorzugt von weniger als 2.5, und insbesondere bevorzugt von weniger als 2 herstellen.

Als transparente Polyamide in diesem Sinne kommen beispielsweise Polyamide und/oder Copolyamide in Frage, wie sie in der EP-A-1369447, der DE-A-101 22 188, der EP-A-725101, der EP-A-0837087, beschrieben sind oder in der EP-A-0 725 100 oder Mischungen davon. In Bezug auf die transparenten Polyamide ist die Offenbarung dieser Dokumente und die darin genannten Polyamid- resp. Copolyamid-Systeme ausdrücklich in diese Beschreibung mit eingeschlossen.

Gemäss einer ersten bevorzugten Ausführungsform beträgt die Lichttransmission der Platte wenigstens 90%, insbesondere bevorzugt wenigstens 91 %.

Bevorzugtermassen beträgt der Haze-Wert der Platte höchstens 5%, bevorzugt weniger als 5% (ASTM 1003, Schichtdicke 2 mm). Besonders bevorzugt werden Haze-Werte von höchstens 4% oder höchstens 3%.

Überraschenderweise zeigt es sich, dass die Zugabe von Polyesteramid insbesondere die Schlagzähigkeit, und ganz besonders die Kerbschlagzähigkeit überraschend sehr stark heraufsetzen kann. Entsprechend verfügt die Polyamidformmasse gemäss einer weiter bevorzugten Ausführungsform der Erfindung respektive ein daraus hergestellter Gegenstand über eine Kerbschlagzähigkeit von wenigstens 14 kJ/m², bevorzugt von mehr als 14 kJ/m², insbesondere bevorzugt von mehr als 15 kJ/m².

Bevorzugtermassen beträgt die Lichttransmission einer aus dem transparenten Homopolyamid und/oder Copolyamid (das heisst ohne Polyesteramid) hergestellten Platte einer Dicke von 2 mm wenigstens 80%, insbesondere bevorzugt wenigstens 90%. Dies ist bevorzugtermassen unter dem Begriff transparentes Homopolyamid und/oder Copolyamid im Rahmen des erfindungsgemässen Blend zu verstehen.

Gemäss einer weiteren bevorzugten Ausführungsform ist die Polyamidformmasse frei von photochromen Farbstoffen. Weiterhin kann sie frei von jeglichen Farbstoffen sein.

Gemäss einer weiteren bevorzugten Ausführungsform verfügt das transparente Homopolyamid und/oder Copolyamid über eine Lösungsviskosität (ηᵣₑₗ) zwischen 1.3 und 2.0, insbesondere bevorzugt zwischen 1.40 und 1.90. Bevorzugtermassen verfügt das transparente Homopolyamid und/oder Copolyamid über einen Glasübergangspunkt T_{g} oberhalb von 90°C, bevorzugt oberhalb von 110°C, insbesondere bevorzugt oberhalb von 130°C.

Eine weitere bevorzugten Ausführungsform ist dadurch gekennzeichnet, dass das Polyesteramid eine Lösungsviskosität (ηᵣₑₗ) von mehr als 1.3, bevorzugt von mehr als 1.4, insbesondere bevorzugt zwischen 1.45 und 2.0, aufweist (nach DIN EN ISO 1628-1).

Um jegliche Bildung von Fliesslinien und Trübungen auszuschliessen, erweist es sich überraschenderweise als vorteilhaft, wenn der Unterschied in den Viskositäten von Homopolyamid (Copolyamid) und Polyesteramid möglichst gering eingestellt wird. Entsprechend erweist es sich nach einer bevorzugten Ausführungsform der Erfindung als vorteilhaft, wenn der Unterschied der Lösungsviskosität (ηᵣₑₗ) von Homopolyamid und/oder Copolyamid, Polyesteramid weniger als 0.4, bevorzugt weniger als 0.3 oder weniger als 0.2 beträgt.

Gemäss einer weiteren bevorzugten Ausführungsform der Erfindung verfügt das Polyesteramid über einen Glasübergangspunkt von weniger als 40°C, bevorzugt von weniger als 25°C, besonders bevorzugt von weniger als 0°C, insbesondere bevorzugt im Bereich von (-60) - (-20) °C. Ebenfalls bevorzugt ist es, dass das Polyesteramid einen E-Modul von weniger als 500 MPa, bevorzugt von weniger als 300MPa, insbesondere bevorzugt von weniger als 200 MPa aufweist. Bevorzugtermassen weist das Polyesteramid einen Schmelzpunkt im Bereich von 100 bis 220°C, bevorzugt von 100 bis 180°C, insbesondere bevorzugt von 100 bis 160°C auf.

Grundsätzlich handelt es sich beim Polyesteramid um eine Struktur, welche nicht über Etherbindungen verfügt. Dabei kann das Polyesteramid Amid- und Ester-Struktureinheiten statistisch, alternierend oder blockweise aufweisen. Bevorzugtermassen handelt es sich beim Polyesteramid aber um ein Blockcopolymer, welches Polyamidblöcke und langkettige Diolblöcke und/oder Polyester- insbesondere Polyesterdiolblöcke aufweist. Es wird hier ausdrücklich verwiesen auf die Systeme, wie sie in der EP-A-0 955 326 offenbart sind. Diese Systeme sind hinsichtlich des Polyesteramids und dessen Herstellungsverfahren ausdrücklich in die vorliegende Offenbarung miteingeschlossen.

Gemäss einer bevorzugten Ausführungsform ist das Polyesteramid ein Blockcopolymer auf Basis eines Polyamids mit einem langkettigen Diol und/oder Polyesterdiol, bevorzugt einem Dimerdiol, insbesondere bevorzugt mit einem C36 Dimerdiol (beispielsweise das Produkt Pripol 2033 von Uniqema, NL). Es kann dabei zusätzlich Dimerdioldimerat, insbesondere bevorzugt C36 Dioldimerat (beispielsweise das Produkt Priplast 3197 von Uniqema, NL), enthalten. Hinsichtlich des Dimerdiol erweist es sich als vorteilhaft, dieses als Diol vorzusehen, welches abgeleitet ist von einem dimeren C36 Fettalkohol bevorzugtermassen mit einem molekularen Gewicht von circa 550g/mol, einer Diolkomponente von bevorzugtermassen mehr als 94.5 Prozent, und einem Hydroxid-Wert von 200-215 mg KOH/g. Hinsichtlich des Dioldimerat erweist sich als vorteilhaft, dieses abgeleitet von einer dimeren C36 Fettsäure auszubilden, insbesondere bevorzugt mit einem molekularen Gewicht im Bereich von 2000g/mol und einem Hydroxid-Wert von zwischen 52-60 mg KOH/g. Hinsichtlich der Ausbildung der Diole respektive der Dioldimerate wird ausdrücklich verwiesen auf die Offenbarung der EP-A-0 955 326, und dort spezifisch auf die Absätze [0014] sowie [0015], deren Offenbarungsgehalt hinsichtlich der Ausgestaltung der Diole respektive der Dioldimerate vorliegend mit eingeschlossen sein soll.

Bevorzugtermassen enthält das Blockcopolymer zusätzlich eine aromatische Säure, insbesondere bevorzugt Terephthalsäure (TPS), die aber auch durch Isophthalsäure (IPS) oder Naphthalindicarbonsäure ersetzt sein kann.

Eine besonders bevorzugte Ausführungsform des verwendeten Polyesteramids ist ein Polyesteramid auf Basis von Laurolactam, Dimerdiol, Dimerdioldimerat und Terephthalsäure. Diese Komponenten sind bevorzugtermassen wie folgt anwesend: im Bereich von 35-45 Gew.-% Laurolactam, 30-40 Gew.-% Dimerdiol, bevorzugt C36 Dimerdiol (zum Beispiel das eingangs genannte Pripol), 5-15 Gew.-% Dimerdioldimerat, insbesondere bevorzugt C36 Dioldimerat (zum Beispiel das eingangs genannte Priplast), sowie 5-15 Gew.-% Terephthalsäure.

Gemäss einer weiteren bevorzugten Ausführungsform liegt das transparente Homopolyamid und/oder Copolyamid in einem Gewichtsanteil von 80-98 Gew.-% vor. Das Polyesteramid liegt bevorzugtermassen in einem Gewichtsanteil von 2-20 Gew.-% vor. Insbesondere wird bevorzugt, dass das Polyesteramid in einem Gewichtsanteil von 5-15 Gew.-% vorliegt.

Das transparente Homopolyamid und/oder Copolyamid ist vorzugsweise ein amorphes oder mikrokristallines transparentes Polyamid, dies insbesondere mit einem E-Modul von mehr als 1000 MPa.

Hinsichtlich des transparenten Homopolyamid und/oder Copolyamid werden folgende Systeme bevorzugt:

Polyamid auf Basis von aliphatischen, cycloaliphatischen oder aromatischen Diaminen, Dicarbonsäuren, Lactamen und/oder Aminocarbonsäuren, bevorzugt mit 6 bis 36 Kohlenstoffatomen, oder eine Mischung solcher Homopolyamide und/oder Copolyamide. Bevorzugt handelt es sich bei den cycloaliphatischen Diaminen dabei um MACM, IPD und/oder PACM, mit oder ohne zusätzliche Substituenten. Bei der aliphatischen Dicarbonsäure handelt es sich vorzugsweise um eine aliphatische Dicarbonsäure mit 2-36, bevorzugt 8-20, linear oder verzweigt angeordneten Kohlenstoffatomen, insbesondere bevorzugt mit 10, 12, 14, 16 oder 18 Kohlenstoffatomen.

Dabei steht MACM für die ISO-Bezeichnung Bis-(4-amino-3-methyl-cyclohexyl)-methan, welches unter dem Handelsnamen 3,3'-Dimethyl-4-4'-diaminodicyclohexylmethan als Laromin C260-Typ (CAS Nr. 6864-37-5), bevorzugt mit Schmelzpunkt zwischen -10°C und 0°C, kommerziell erhältlich ist. Eine Ziffer wie z.B. in MACM12 steht dabei für eine aliphatische lineare C12 Dicarbonsäure (DDS, Dodecandisäure), mit welcher das Diamin MACM polymerisiert ist.

IPS steht für Isophthalsäure und PACM steht für die ISO-Bezeichnung Bis-(4-aminocyclohexyl)-methan, welches unter dem Handelsnamen 4,4'-Diaminodidyclohexymethan als Dicykan-Typ (CAS Nr. 1761-71-3), bevorzugt mit Schmelzpunkt zwischen 30°C und 45°C, kommerziell erhältlich ist.

Ein Homopolyamid ausgewählt aus der Gruppe MACM12, MACM14, MACM16, MACM 18, PACM12, PACM14, PACM16, PACM18 und/oder ein Copolyamid ausgewählt aus der Gruppe MACM12/PACM12, MACM14/PACM14, MACM16/PACM16, MACM18/PACM18. Ebenfalls möglich sind Mischungen solcher Polyamide.

Polyamid auf Basis von aromatischen Dicarbonsäuren mit 8 bis 18, bevorzugt 8-14 Kohlenstoffatomen oder eine Mischung solcher Homopolyamide und/oder Copolyamide, bevorzugt auf Basis von PXDA und/oder MXDA, insbesondere bevorzugt auf Basis von Lactamen und/oder Aminocarbonsäuren, wobei es sich bei den aromatischen Dicarbonsäuren bevorzugt um TPS, Naphthalindicarbonsäure und/oder IPS handelt.

Polyamid ausgewählt aus der Gruppe: MACM9-18, PACM9-18, MACMI/12, 6I/6T/MACMI/MACMT/12, 3-6T, 6I6T, TMDT, 6I/MACMI/MACMT, 6I/PACMI/PACMT, 6I/6T/MACMI, MACMI/MACM36, 6I; 12/PACMI oder 12/MACMI, 12/MACMT, 6IPACMT, 6/6I, 6/IPDT oder Mischungen daraus, wobei 50 mol.-% der IPS durch TPS ersetzt sein kann.

Bei den Additiven kann es sich um Stabilisatoren wie nicht-photochrome Farbstoffe wie beispielsweise UV-Absorber, UV-Stabilisatoren, Hitzestabilisatoren, Gleitmittel wie beispielsweise Paraffinöle oder Stearate, Füllstoffe, Radikalfänger und/oder um Verarbeitungshilfsstoffe, Weichmacher, Verstärkungsstoffe wie beispielsweise transparent dispergierbare Nano-Partikel oder Glaskugeln oder Glasfasern, weitere Polymere und/oder um funktionelle Additive bevorzugt zur Beeinflussung optischer Eigenschaften wie insbesondere des Brechungsindexes oder um Kombinationen oder Mischungen davon handeln.

Des weiteren betrifft die vorliegende Erfindung einen transparenten Gegenstand mit wenigstens einem Bereich oder einer Schicht aus einer Polyamidformmasse, wie oben dargestellt. Insbesondere bevorzugt handelt es sich um eine Folie, einen Formkörper, ein Profil, ein Rohr, einen Hohlkörper oder einen optisch variablen Filter oder eine optische Linse, bevorzugt um eine ophthalmische Linse insbesondere bevorzugt um ein Element mit spektraler Filterwirkung wie beispielsweise als Brillenglas, Sonnenlinse, Korrekturlinse, optischer Filter, Skibrille, Visier, Schutzbrille, Fotorecording, Display, optischer Datenspeicher, Fenster von Gebäuden und Fahrzeugen, oder um ein Dekorationselement oder ein Strukturelement wie beispielsweise als Brillenfassung, Spielzeug, als Teil eines Sportschuhs, als Abdeckung, insbesondere als Mobiltelefongehäuse, Teil von elektronischen Geräten, Beschichtung insbesondere von Verpackungen, Dekorationsartikeln, Sportgeräten, Verkleidungen bevorzugt im Automobilbereich. Der Gegenstand kann gefärbt, insbesondere gradientengefärbt sein, eine Antireflexionsbeschichtung, eine Kratzschutzbeschichtung, eine optische Filterbeschichtung, eine polarisierende Beschichtung, eine Sauerstoffbarrierebeschichtung oder Kombinationen solcher Beschichtungen aufweisen.

Bevorzugtermassen ist der Gegenstand dadurch gekennzeichnet, dass der Bereich oder die Schicht aus der Polyamidformmasse einen Glasübergangspunkt oberhalb von 90°C, bevorzugt oberhalb von 100°C, insbesondere bevorzugt oberhalb von 130°C, aufweist. Zudem betrifft die vorliegende Erfindung ein Verfahren zur Herstellung einer Polyamidformmasse, wie sie oben dargestellt ist. Das Verfahren ist insbesondere dadurch gekennzeichnet, dass das Homopolyamid und/oder Copolyamid sowie das Polyesteramid als Granulat gemischt und in einem Extruder mit Massetemperaturen im Bereich von 220-350°C zu einem Strang geformt und mit geeigneten Granulatoren zu Pellets geschnitten werden, wobei bevorzugt Formmassen für transparente Formteile auf dem Extruder mit einem Schmelzefilter gereinigt werden, wobei geeignete Schmelzfilter aus Sieben in Scheibenform, wobei auch mehrere Scheiben hintereinander angeordnet sein können, oder in Form von Kerzenfiltern aufgebaut sein können, und wobei während der Compoundierung Additive zugegeben werden können, die zur Ausrüstung der Formmasse erwünscht sind, wie beispielsweise Verarbeitungsstabilisatoren, Farbpigmente, UV-Absorber, Hitzestabilisatoren, Flammschutzmittel, andere transparente Polyamide oder Polyamid 12.

Weiterhin betrifft die vorliegende Erfindung ein Verfahren zur Herstellung eines Gegenstandes, wie er oben dargestellt ist, welches dadurch gekennzeichnet ist, dass eine Polyamidformmasse, wie sie oben dargestellt ist, in einem Extrusionsverfahren, einem Spritzblasverfahren, einem Spritzgussverfahren oder einem Hinterspritzen zum Gegenstand geformt wird.

Weitere bevorzugte Ausführungsformen der vorliegenden Erfindung sind in den abhängigen Ansprüchen beschrieben.

### WEGE ZUR AUSFÜHRUNG DER ERFINDUNG

Die Offenbarung betrifft hochtransparente Polyamidformmassen mit insbesondere verbesserter Kerbschlagzähigkeit, die zur Herstellung von optischen Linsen oder Sonnenlinsen, aber auch für Anwendungen mit hoher dynamischer Beanspruchung geeignet sind. Die vorgeschlagenen hochtransparenten Polyamidformmassen bestehen aus einer Polymermischung, die ein transparentes Polyamid (amorph oder mikrokristallin) und ein Polyesteramid, bevorzugt als Blockcopolymer mit Polyester- und Polyamidsegmenten, enthält. Diese Blockcopolymere können so eingestellt werden, dass die erfindungsgemässen Formmassen sehr geringe Haze-Werte von höchstens 5% erreichen und beim Spritzgiessen keine Entmischung eintritt.

Die transparenten Polymermischungen haben eine hohe Abriebfestigkeit und eine hohe Beständigkeit bei dynamischer Belastung und eignen sich u.a. auch für transparente Sohlen von Sportschuhen. Diese Sportschuhe haben innerhalb der Sohle komplizierte mechanische Elemente, die dem Benutzer durch transparente Sohlen gezeigt werden sollen. Die hierfür geforderte Transparenz liegt mit wenigstens 90% pro 2mm auf sehr hohem Niveau. Gleichzeitig müssen folgende Anforderungen erfüllt werden: Haze höchstens 5 %, Kerbschlagzähigkeit nach Charpy > 14 kJ/m² (ISO 179/2-1eA).

Es wurde nun überraschend gefunden, dass eine Kombination aus transparentem Polyamid (amorphes oder mikrokristallines PA) und einem geeignet angepassten Polyesteramid die geforderte hohe Transparenz bei gleichzeitig niedrigem Haze erreicht und im Bereich hoher Scherung keine Markierungen (Fliesslinien) abbildet. Die mechanischen und thermischen Eigenschaften entsprechen überwiegend dem amorphen Polyamid, wobei jedoch eine wesentlich höhere Zähigkeit, insbesondere Kerbschlagzähigkeit, erzielt wird.

Es zeigt sich zudem, dass durch Anpassung der Zusammensetzung und der Viskosität des Polyesteramids an ähnliche amorphe oder mikrokristalline, transparente Polyamide weitere Kombinationen möglich sind, die Transparenzwerte von > 85, bevorzugt > 90% und Haze-Werte von höchstens 5% aufweisen können.

Polyesteramide der Zusammensetzung 1: a) Laurolactam 41.1 Gew.-%, b) Pripol 2033 (Dimerdiol, erhältlich von Uniqema, NL) 35,8 Gew.-%, c) Priplast 3197 (PES Diol, erhältlich von Uniqema, NL) 11.2 Gew.-% und d) Terephthalsäure (TPS) 11.7 Gew.-%, hergestellt mit einer relativen Viskosität (ηᵣₑₗ) von 1.35, gemessen in 0.5% m-Kresol, werden nach bekannten Herstellverfahren für Polyesteramide unter Vakuum polymerisiert (EP-A-0 955 326, die Offenbarung dieses Dokuments wird ausdrücklich hinsichtlich der Polyesteramide und deren Herstellungsverfahren mit eingeschlossen). Compoundiert mit 90 % eines Grilamid TR 90 (erhältlich von EMS-Chemie AG, CH; MACM12, entspricht einer Zusammensetzung nach der EP-A-0 837 087 oder der EP-A-0 725 101, deren Offenbarung hinsichtlich dieser Komponente respektive deren Herstellungsverfahren hiermit ausdrücklich mit eingeschlossen wird) mit ηᵣₑₗ = 1.73 wird transparentes Granulat erhalten.

Das Granulat kann auf einer Spritzgiessmaschine zu Platten mit 92% Transmission und Haze < 2% (ASTM 1003, Lichtart C, Schichtdicke 2 mm, Messgerät: Byk Gardner) verarbeitet werden. Es können dabei im Spritzgussteil unter Umständen Fliesslinien im Bereich des Angusses entstehen, die auf eine Entmischung der beiden Polymere hinweisen. Die Fliesslinien und Trübungen im Angussbereich können durch Einstellen der relativen Viskosität des Polyesteramids auf ηᵣₑₗ > 1.45 beseitigt werden. Je kleiner die Differenz der relativen Viskositäten des amorphen Polyamids und des Polyesteramids, desto geringer die Neigung zur Ausbildung von Fliesslinien oder Trübungen im Angussbereich.

Das Polyesteramid mit Zusammensetzung 1 wie oben angegeben als Compound mit 90 Gew.-% Grilamid TR FE5537 (EMS-Chemie AG, CH; PACM12/MACM12, entspricht einer Zusammensetzung der EP 1 369 447, deren Offenbarung sowohl hinsichtlich des Polyamid wie auch hinsichtlich dessen Herstellungsverfahren ausdrücklich eingeschlossen wird) zeigt gute Transparenz > 90% und eine noch höhere Kerbschlagzähigkeit als die Kombination mit 90 Gew.-% Grilamid TR 90.

Die zugrunde gelegte Aufgabe wird also gelöst, wenn z.B. steife, hochtransparente Polyamide mit flexiblen, teilkristallinen Polyesteramiden mit Schmelzpunkten im Bereich 100-180°C, bevorzugt im Bereich 100 - 160°C compoundiert werden. Die relativen Viskositäten der Polyamide und der Polyesteramide sollten sich in einer bevorzugten Ausführungsform um weniger als 0.3 Einheiten unterscheiden, damit keine optischen Artefakte im Angussbereich des Formteils beim Spritzgiessen entstehen.

Als steife hochtransparente Polyamide eignen sich besonders amorphe oder mikrokristalline transparente Polyamide, mit E-Moduli über 1000 MPa, deren Glastemperatur über 100°C liegt.

Solche Polyamide enthalten aliphatische, cycloaliphatische und oder aromatische Diamine, Dicarbonsäuren und/oder Lactame bzw. Aminocarbonsäuren. Aliphatische Diamine enthalten 2 bis 20 C-Atome, welche linear oder verzweigt angeordnet sein können. Cycloaliphatische Bausteine sind beispielsweise PACM, MACM, IPD mit oder ohne zusätzliche Substituenten. Beispiele für aromatische Amine sind PXDA oder MXDA. Die möglichen Dicarbonsäuren besitzen vergleichbare Strukturteile zwischen den Säuregruppen. Beispiele für die aromatischen Dicarbonsäuren sind TPS, IPS oder Naphthalindicarbonsäure. Als Lactame eignen sich Lactam 6 oder Lactam 12, die als Ringe oder offen als Aminocarbonsäure eingesetzt werden können.

Bevorzugte Kombinationen aus Diaminen, Dicarbonsäuren und Lactamen sind: MACM9-18, PACM9-18, 6I/6T/MACMI/MACMT/12, 3-6T oder Mischungen daraus, sowie MACMI/12 und PACMI/12, wobei 50 mol.-% der IPS durch TPS ersetzt sein kann.

Die flexiblen Polyesteramide weisen einen E-Modul von unter 500 MPa, bevorzugt von unter 300 MPa, insbesondere unter 200 MPa auf, haben Schmelzpunkte im Bereich von 100 bis 220°C, bevorzugt von 100 bis 180°C, insbesondere bevorzugt von 100 bis 160°C sowie Glastemperaturen unter 0°C, bevorzugt unter - 20°C.

Als transparente Polyamide kommen also folgende PA-Zusammensetzungen in Frage:
1. PA aufgebaut aus cycloaliphatischen Diaminen, bevorzugt PACM, MACM und aliphatischen Dicarbonsäuren mit C8 bis C36; C10, C12 und C18 seien explizit genannt. PA sind z.B. die Homopolyamide MACM12, MACM18 oder PACM12 oder die Copolyamide MACM12/PACMI2, MACM18/PACMI8
2. PA mit aromatischen Dicarbonsäuren mit C8 bis C14, bevorzugt TPS, IPS. Die Diamine können aliphatisch oder cycloaliphatisch sein. Daneben können auch Lactame und /oder Aminocarbonsäuren als Monomer eingesetzt werden. Beispielhafte PA sind: 6I6T, TMDT, 6I/MACMI/MACMT, 6I/PACMI/PACMT, 6I/6T/MACMI, MACMI/MACM36, 6I; Lactamhaltige PA: 12/PACMI oder 12/MACMI, 12/MACMT, 6/PACMT, 6/6I, 6/IPDT
3. PA mit Diamin, das einen aromatischen Kern besitzt: z.B. MXDA. Die Dicarbonsäuren haben aromatische und/oder aliphatische Struktur. Beispiel ist das Copolyamid 6I/MXDI.

Geeignete Polyesteramide enthalten Lactame, Dicarbonsäuren, Diamine und langkettige Diole. Als langkettige Diole werden vorzugsweise Dimerdiole oder Polyesterdiole auf Basis von Dimerdiolen eingesetzt. Solche Produkte sind unter den Bezeichnungen Pripol 2033 oder Priplast 3197 im Handel von Uniqema, NL, erhältlich.

Die Herstellung der Polyamide erfolgt in Druckautoklaven nach bekannten Verfahren (vergleiche u. a. die weiter oben angegebenen Schriften), wobei insbesondere transparente Polyamide eine hohe Sauberkeit der Anlagen und der Rohstoffe erfordern. Die Herstellung der Polyesteramide erfolgt in Vakuumkesseln, die üblicherweise zur Herstellung von Polyestern benutzt werden.

Zur Herstellung der erfindungsgemässen Compounds werden die beiden Granulate gemischt und in einem Extruder mit Massetemperaturen um 220-350°C zu einem Strang geformt und mit geeigneten Granulatoren zu Pellets geschnitten. Formmassen für transparente Fonnteile werden auf dem Extruder mit einem Schmelzfilter gereinigt. Geeignete Schmelzfilter können aus Sieben in Scheibenform oder in Form von Kerzenfiltern aufgebaut sein.

Während der Compoundierung können weitere Additive zugegeben werden, die zur Ausrüstung der Formmasse erwünscht sind, wie beispielsweise Verarbeitungsstabilisatoren, Farbpigmente, UV-Absorber, Hitzestabilisatoren, Flammschutzmittel, andere transparente Polyamide oder Polyamid 12.

Neben der Spritzgussverarbeitung können die erfindungsgemässen Formmassen auch durch Extrusionsverfahren z.B. zu Folien, Rohren, Profilen oder Hohlkörpern verarbeitet werden.

### Beispiele B1 bis B5 und Vergleichsbeispiele VB1 bis VB5:

Zunächst wurden die Polymermischungen, bestehend aus transparentem Polyamid und einem Blockcopolymer auf einem Doppelwellenextruder Collin Teach-Line ZK25T L/D= 18 hergestellt. Die Zylindertemperaturen betrugen mit Ausnahme der Einzugszone zwischen 220 und 280°C, die Schneckendrehzahl 120 - 250 Upm.

Anschliessend wurden diese Mischungen auf einer Arburg Allrounder 350-90-220D Spritzgussmaschine zu Rundplatten der Dimension 70 x 2 mm (optische Untersuchungen) bzw. den anderen benötigten Probekörpern verarbeitet, wobei die Zylindertemperaturen zwischen 220 - 280°C und die Formtemperatur zwischen 20 und 60°C lagen. Die Schneckendrehzahl betrug 150 - 400 Upm.

Die Zusammensetzungen und die Eigenschaften der in den einzelnen Beispielen zum Einsatz kommenden Polyamidformmassen und die der Vergleichsbeispiele sind in der Tabelle 1 zusammengefasst.

Die hergestellten Formmassen wurden wie folgt geprüft:
MVR: (Melt volume rate) bei 275°C nach ISO 1133
SZ: Schlagzähigkeit nach ISO 179/1eU (Charpy)
KSZ: Kerbschlagzähigkeit nach ISO 179/1eA (Charpy)

Zug-E-Modul, Reissfestigkeit und Reissdehnung wurden nach ISO 527 an ISO-Zugstäben, Norm ISO/CD 3167, Typ A1, 170 x 20/10 x 4 mm bei einer Temperatur von 23°C ermittelt. Die mechanischen Werte wurden in trockenem Zustand bestimmt.

Die relative Viskosität (ηᵣₑₗ) wurde bei 20°C an einer 0.5%-igen m-Kresollösung nach der DIN EN ISO-Norm 307 bestimmt.

Transmission, Haze und Clarity wurden bei 23°C mit einem Haze-Gard Plus der Firma Byk-Gardner nach ASTM D-1003 (CIE Lichtart C) an Rundplatten der Dimension 70x2 mm bestimmt. Transmission, Clarity und Haze werden in % der eingestrahlten Lichtmenge angegeben.

Der Yellow-Index wurde nach ASTM D1925 (Lichtart C2) an Rundplatten mit der Dimension 70 x 2 mm gemessen.

FE7314 und FE7334 sind Polyesteramide auf Basis Polyamid 12 und Dimerdiol, welche generell in EP 0 955 326 B1 beschrieben werden (T_{g} = -30°C).

PEBAX 5533 ist ein Polyamid-12-Blockcopolymer mit Ethersegmenten der ARKEMA, Frankreich. (T_{g} = ca. -40°).

Lotader GMA AX8840 ist ein Polyethylencopolymer mit 8 Gew.-% Glycidylmethacrylat der Firma Arkema (FR).

Paraloid BTA 753 ist ein Kern-Mantel-Schlagzähmodifier auf Basis von Methacrylaten, Butadien und Styrol der Firma Rohm and Haas (DE).

MB XE 3680 ist ein kommerzielles Masterbatch auf Basis eines niederviskosen Polyamid 12 mit UV-und Hitzestabilisatoren der EMS-Chemie AG, Schweiz.

**Tabelle 1**

| **Beispiel** | | | **B1** | **B2** | **B3** | **B4** | **B5** | **VB1** | **VB2** | **VB3** | **VB4** | **VB5** |
|---|---|---|---|---|---|---|---|---|---|---|---|---|
| **Zusammensetzungen** | | | | | | | | | | | | |
| TR 90 | | Gew.- % | 90 | 90 | 85 | 87 | | 100 | 90 | 90 | 84 | 90 |
| FE5537 | | Gew.- % | | | | | 87 | | | | | |
| FE7334 | | Gew.- % | 10 | | 15 | | | | | | | |
| FE7314 | | Gew.- % | | 10 | | 10 | 10 | | | | 10 | |
| Lotader GMA AX8840 | | Gew.- % | | | | | | | 10 | | 3 | |
| Paraloid BTA 753 | | Gew.- % | | | | | | | | 10 | | |
| Pebax 5533 | | Gew.- % | | | | | | | | | | 10 |
| MB PA12 XE 3680 | | Gew.- % | | | | 3 | 3 | | | | 3 | |

| **Basisdaten** | | | | | | | | | | | | |
|---|---|---|---|---|---|---|---|---|---|---|---|---|
| Wasser | | % | 0.010 | 0.014 | 0.013 | 0.013 | 0.015 | 0.013 | 0.014 | 0.015 | 0.016 | 0.011 |
| T_{g} | | °C | 152 | 153 | 152 | 152 | 152 | 153 | 153 | 151 | 153 | 149 |
| MVR 275°C/5kg | | ml/10 min | 25 | 25 | 38 | 24 | 26 | 16 | 13 | 15 | 26 | 25 |

| **Optische Eigenschaften** | | | | | | | | | | | | |
|---|---|---|---|---|---|---|---|---|---|---|---|---|
| Yellow Index ASTM D 1925 (Lichtart C2) | | - | 2.4 | 1.6 | 2.9 | 1.3 | 1.3 | -0.3 | 7.3 | 9.0 | 5.0 | 9.5 |
| Haze ASTM D1003 | | % | 1.9 | 2.6 | 3.5 | 2.2 | 5.0 | 1.1 | 16.6 | 82.5 | 64.8 | 6.0 |
| Transmission ASTM D1003 | | % | 93.1 | 93.6 | 92.5 | 93.4 | 91.9 | 93.7 | 86.9 | 72.6 | 81.7 | 88.8 |
| Clarity | | % | 99.5 | 97.9 | 97.5 | 98.3 | 97.8 | 99.5 | 99.1 | 94.8 | 95.1 | 99.5 |

| **Mechanische Eigenschaften** | | | | | | | | | | | | |
|---|---|---|---|---|---|---|---|---|---|---|---|---|
| Zugmodul | | MPa | 1330 | 1330 | 1250 | 1330 | 1310 | 1500 | 1270 | 1280 | 1250 | 1400 |
| Reissfestigkeit | | MPa | 51 | 52 | 47 | 52 | 50 | 62 | 48 | 48 | 51 | 47 |
| Reissdehnung | | % | 130 | 130 | 130 | 140 | 140 | 150 | 115 | 125 | 145 | 105 |
| Schlagzähigkeit 23°C, Charpy new | | kJ/m² | oB | oB | oB | oB | oB | oB | oB | oB | oB | oB |
| Kerbschlagzähigkeit 23°C, Charpy new | | kJ/m² | 15.8 | 17.2 | 19.5 | 14.7 | 17.4 | 8.2 | 63.0 | 37.5 | 24.4 | 13.8 |

## Patentansprüche

1. Polyamidformmasse enthaltend
wenigstens ein transparentes Homopolyamid und/oder Copolyamid in einem Gewichtsanteil von 70-99 Gew.-%;
wenigstens ein weiteres Polymer in einem Gewichtsanteil von 1-30 Gew.-%;
sowie optional
weitere Farbstoffe und/oder Additive,
**dadurch gekennzeichnet, dass**
es sich beim weiteren Polymer um ein Polyesteramid handelt, und dass
die Lichttransmission einer aus der Polyamidformmasse hergestellten Platte einer Dicke von 2 mm wenigstens 88% beträgt.

2. Polyamidformmasse nach Anspruch 1, **dadurch gekennzeichnet, dass** die Lichttransmission der Platte wenigstens 90%, bevorzugt wenigstens 91% beträgt.

3. Polyamidformmasse nach einem der vorhergehenden Ansprüche, **dadurch gekennzeichnet, dass** der Haze der Platte höchstens 5%, bevorzugt weniger als 5% beträgt.

4. Polyamidformmasse nach einem der vorhergehenden Ansprüche, **dadurch gekennzeichnet, dass** der Haze der Platte höchstens 4%, bevorzugt höchstens 3% beträgt.

5. Polyamidformmasse nach einem der vorhergehenden Ansprüche, **dadurch gekennzeichnet, dass** die Platte eine Kerbschlagzähigkeit von wenigstens 14 kJ/m², bevorzugt von mehr als 14 kJ/m², insbesondere bevorzugt von mehr als 15 kJ/m² aufweist.

6. Polyamidformmasse nach einem der vorhergehenden Ansprüche, **dadurch gekennzeichnet, dass** die Platte einen Yellow-Index von weniger als 3, bevorzugt von weniger als 2.5 und insbesondere bevorzugt von weniger als 2 aufweist.

7. Polyamidformmasse nach einem der vorhergehenden Ansprüche, **dadurch gekennzeichnet, dass** die Lichttransmission einer aus dem transparenten Homopolyamid und/oder Copolyamid hergestellten Platte einer Dicke von 2 mm wenigstens 90% beträgt.

8. Polyamidformmasse nach einem der vorhergehenden Ansprüche, **dadurch gekennzeichnet, dass** sie frei von photochromen Farbstoffen ist.

9. Polyamidformmasse nach einem der vorhergehenden Ansprüche, **dadurch gekennzeichnet, dass** das transparente Homopolyamid und/oder Copolyamid eine Lösungsviskosität (ηᵣₑₗ) zwischen 1.3 und 2.0, insbesondere bevorzugt zwischen 1.40 und 1.90, aufweist und/oder einen Glasübergangspunkt T_{g} oberhalb von 90°C, bevorzugt oberhalb von 110°C, insbesondere bevorzugt oberhalb von 130°C.

10. Polyamidformmasse nach einem der vorhergehenden Ansprüche, **dadurch gekennzeichnet, dass** das Polyesteramid eine Lösungsviskosität (ηᵣₑₗ) von mehr als 1.3, bevorzugt von mehr als 1.4, insbesondere bevorzugt zwischen 1.45 und 2.0, aufweist.

11. Polyamidformmasse nach einem der vorhergehenden Ansprüche, **dadurch gekennzeichnet, dass** der Unterschied der Lösungsviskosität (ηᵣₑₗ) von Homopolyamid und/oder Copolyamid, Polyesteramid weniger als 0.4, bevorzugt weniger als 0.3 oder weniger als 0.2 beträgt.

12. Polyamidformmasse nach einem der vorhergehenden Ansprüche, **dadurch gekennzeichnet, dass** das Polyesteramid einen Glasübergangspunkt von weniger als 40°C, bevorzugt von weniger als 25°C, besonders bevorzugt von weniger als 0°C, insbesondere bevorzugt im Bereich von (-60) - (-20) °C aufweist.

13. Polyamidformmasse nach einem der vorhergehenden Ansprüche, **dadurch gekennzeichnet, dass** das Polyesteramid einen E-Modul von weniger als 500 MPa, bevorzugt von weniger als 300 MPa, insbesondere bevorzugt von weniger als 200 MPa aufweist.

14. Polyamidformmasse nach einem der vorhergehenden Ansprüche, **dadurch gekennzeichnet, dass** das Polyesteramid einen Schmelzpunkt im Bereich von 100 bis 220°C, bevorzugt von 100 bis 180°C, insbesondere bevorzugt von 100 bis 160°C aufweist.

15. Polyamidformmasse nach einem der vorhergehenden Ansprüche, **dadurch gekennzeichnet, dass** das Polyesteramid ein Blockcopolymer ist.

16. Polyamidformmasse nach einem der vorhergehenden Ansprüche, **dadurch gekennzeichnet, dass** das Polyesteramid ein Blockcopolymeres auf Basis eines Polyamids mit einem langkettigen Diol und/oder Polyesterdiol, bevorzugt einem Dimerdiol, insbesondere bevorzugt mit einem C36 Dimerdiol ist.

17. Polyamidformmasse nach Anspruch 16, **dadurch gekennzeichnet, dass** das Blockcopolymer zusätzlich Dimerdioldimerat, insbesondere bevorzugt C36 Dioldimerat, enthält.

18. Polyamidformmasse nach einem der Ansprüche 16 oder 17, **dadurch gekennzeichnet, dass** das Blockcopolymer zusätzlich eine aromatische Säure, insbesondere bevorzugt Terephthalsäure enthält.

19. Polyamidformmasse nach einem der vorhergehenden Ansprüche, **dadurch gekennzeichnet, dass** das Polyesteramid auf Basis von im Bereich von 35-45 Gew.-% Laurolactam, 30-40 Gew.-% Dimerdiol, bevorzugt C36 Dimerdiol, 5-15 Gew.-% Dimerdioldimerat, insbesondere bevorzugt C36 Dioldimerat, sowie 5-15 Gew.-% Terephthalsäure gebildet ist.

20. Polyamidformmasse nach einem der vorhergehenden Ansprüche, **dadurch gekennzeichnet, dass** das transparente Homopolyamid und/oder Copolyamid in einem Gewichtsanteil von 80-98 Gew.-% vorliegt.

21. Polyamidformmasse nach einem der vorhergehenden Ansprüche, **dadurch gekennzeichnet, dass** das Polyesteramid in einem Gewichtsanteil von 2-20 Gew.-% vorliegt.

22. Polyamidformmasse nach einem der vorhergehenden Ansprüche, **dadurch gekennzeichnet, dass** das Polyesteramid in einem Gewichtsanteil von 5-15 Gew.-% vorliegt.

23. Polyamidformmasse nach einem der vorhergehenden Ansprüche, **dadurch gekennzeichnet, dass** es sich beim transparenten Homopolyamid und/oder Copolyamid um ein amorphes oder mikrokristallines transparentes Polyamid mit einem E-Modul von mehr als 1000 MPa handelt.

24. Polyamidformmasse nach einem der vorhergehenden Ansprüche, **dadurch gekennzeichnet, dass** es sich beim transparenten Homopolyamid und/oder Copolyamid um ein Polyamid auf Basis von aliphatischen, cycloaliphatischen oder aromatischen Diaminen, Dicarbonsäuren, Lactamen und/oder Aminocarbonsäuren, bevorzugt mit 6 bis 36 Kohlenstoffatomen, handelt oder um eine Mischung solcher Homopolyamide und/oder Copolyamide.

25. Polyamidformmasse nach Anspruch 24, **dadurch gekennzeichnet, dass** es sich bei den cycloaliphatischen Diaminen um MACM, IPD und/oder PACM, mit oder ohne zusätzliche Substituenten, handelt.

26. Polyamidformmasse nach Anspruch 24 oder 25, **dadurch gekennzeichnet, dass** es sich bei der aliphatischen Dicarbonsäure um eine aliphatische Dicarbonsäure mit 2-36, bevorzugt 8-20 linear oder verzweigt angeordneten Kohlenstoffatomen, insbesondere bevorzugt mit 10, 12, 14, 16 oder 18 Kohlenstoffatomen handelt.

27. Polyamidformmasse nach einem der Ansprüche 24 bis 26, **dadurch gekennzeichnet, dass** es sich beim transparenten Polyamid um ein Homopolyamid ausgewählt aus der Gruppe MACM12, MACM14, MACM16, MACM18, PACM12, PACM14, PACM16, PACM18 und/oder um ein Copolyamid ausgewählt aus der Gruppe MACM12/PACM12, MACM14/PACM14, MACM16/PACM16, MACM18/PACM18, oder eine Mischung solcher Polyamide, handelt.

28. Polyamidformmasse nach einem der Ansprüche 24 bis 27, **dadurch gekennzeichnet, dass** es sich beim transparenten Homopolyamid und/oder Copolyamid um ein Polyamid auf Basis von aromatischen Dicarbonsäuren mit 8 bis 18, bevorzugt 8-14 Kohlenstoffatomen oder eine Mischung solcher Homopolyamide und/oder Copolyamide handelt, bevorzugt auf Basis von PXDA und/oder MXDA, insbesondere bevorzugt auf Basis von Lactamen und/oder Aminocarbonsäuren, wobei es sich bei den aromatischen Dicarbonsäuren bevorzugt um TPS, Naphthalindicarbonsäure und/oder IPS handelt.

29. Polyamidformmasse nach Anspruch 28, **dadurch gekennzeichnet, dass** es sich beim transparenten Homopolyamid und/oder Copolyamid um ein Polyamid ausgewählt aus der Gruppe: MACM9-18, PACM9-18, MACMI/12, 6I/6T/MACMI/MACMT/12, 3-6T, 6I6T, TMDT, 6I/MACMI/MACMT, 6I/PACMI/PACMT, 6I/6T/MACMI, MACMI/MACM36, 61; 12/PACMI oder 12/MACMI, 12/MACMT, 6IPACMT, 6/61, 6/IPDT oder Mischungen daraus handelt, wobei 50 mol.-% der IPS durch TPS ersetzt sein kann.

30. Polyamidformmasse nach einem der vorhergehenden Ansprüche, **dadurch gekennzeichnet, dass** es sich bei den Additiven um Stabilisatoren wie nichtphotochrome Farbstoffe wie beispielsweise UV-Absorber, UV-Stabilisatoren, Hitzestabilisatoren, Gleitmittel wie beispielsweise Paraffinöle oder Stearate, Füllstoffe, Radikalfänger und/oder um Verarbeitungshilfsstoffe, Weichmacher, Verstärkungsstoffe wie beispielsweise transparent dispergierbare Nano-Partikel oder Glaskugel oder Glasfasern, weitere Polymere und/oder um funktionelle Additive bevorzugt zur Beeinflussung optischer Eigenschaften wie insbesondere des Brechungsindexes oder um Kombinationen oder Mischungen davon handelt.

31. Transparenter Gegenstand mit wenigstens einem Bereich oder einer Schicht aus einer Polyamidformmasse nach einem der vorhergehenden Ansprüche.

32. Gegenstand nach Anspruch 31, **dadurch gekennzeichnet, dass** es sich um eine Folie, einen Formkörper, ein Profil, ein Rohr, einen Hohlkörper oder einen optisch variablen Filter oder eine optische Linse handelt, bevorzugt um eine ophthalmische Linse insbesondere bevorzugt um ein Element mit spektraler Filterwirkung wie beispielsweise als Brillenglas, Sonnenlinse, Korrekturlinse, optischer Filter, Skibrille, Visier, Schutzbrille, Fotorecording, Display, optischer Datenspeicher, Fenster von Gebäuden und Fahrzeugen, oder um ein Dekorationselement oder ein Strukturelement wie beispielsweise als Brillenfassung, Spielzeug, als Teil eines Sportschuhs, Abdeckung, insbesondere als Mobiltelefongehäuse, Teil von elektronischen Geräten, Beschichtung insbesondere von Verpackungen, Dekorationsartikeln, Sportgeräten, Verkleidungen bevorzugt im Automobilbereich.

33. Gegenstand nach einem der Ansprüche 31 - 32, **dadurch gekennzeichnet, dass** der Gegenstand gradientengefärbt ist, eine Antireflexionsbeschichtung, eine Kratzschutzbeschichtung, eine optische Filterbeschichtung, eine polarisierende Beschichtung, eine Sauerstoffbarrierebeschichtung oder Kombinationen solcher Beschichtungen aufweist.

34. Gegenstand nach einem der Ansprüche 31 -33, **dadurch gekennzeichnet, dass** der Bereich oder die Schicht aus der Polyamidformmasse einen Glasübergangspunkt oberhalb von 90°C, bevorzugt oberhalb von 100°C, insbesondere bevorzugt oberhalb von 130°C, aufweist.

35. Verfahren zur Herstellung einer Polyamidformmasse nach einem der Ansprüche 1-30, **dadurch gekennzeichnet, dass** das Homopolyamid und/oder Copolyamid sowie das Polyesteramid als Granulat gemischt und in einem Extruder mit Massetemperaturen im Bereich von 220-350°C zu einem Strang geformt und mit geeigneten Granulatoren zu Pellets geschnitten werden, wobei bevorzugt Formmassen für transparente Formteile auf dem Extruder mit einem Schmelzefilter gereinigt werden, wobei geeignete Schmelzefilter aus Sieben in Scheibenform oder in Form von Kerzenfiltern aufgebaut sein können, und wobei während der Compoundierung Additive zugegeben werden können, die zur Ausrüstung der Formmasse erwünscht sind, wie beispielsweise Verarbeitungsstabilisatoren, Farbpigmente, UV-Absorber, Hitzestabilisatoren, Flammschutzmittel, andere transparente Polyamide oder Polyamid 12.

36. Verfahren zur Herstellung eines Gegenstandes nach einem der Ansprüche 31-34, **dadurch gekennzeichnet, dass** eine Polyamidformmasse nach einem der Ansprüche 1 - 30 in einem Extrusionsverfahren, einem Spritzblasverfahren, einem Spritzgussverfahren oder einem Hinterspritzen zum Gegenstand geformt wird.

## Claims

1. A polyamide molding composition comprising
at least one transparent homopolyamide and/or copolyamide in a proportion by weight of from 70 to 99% by weight;
at least one further polymer in a proportion by weight of from 1 to 30% by weight;
and also optionally
further dyes and/or additives,
**characterized in that**
the further polymer is a polyesteramide, and wherein
the light transmittance of a sheet of thickness 2 mm produced from the polyamide molding composition is at least 88%.

2. The polyamide molding composition as claimed in claim 1, **characterized in that** the light transmittance of the sheet is at least 90%, preferably at least 91%.

3. The polyamide molding composition as claimed in any of the preceding claims, **characterized in that** the haze of the sheet is at most 5%, preferably less than 5%.

4. The polyamide molding composition as claimed in any of the preceding claims, **characterized in that** the haze of the sheet is at most 4%, preferably at most 3%.

5. The polyamide molding composition as claimed in any of the preceding claims, **characterized in that** the notched impact resistance of the sheet is at least 14 kJ/m², preferably more than 14 kJ/m², particularly preferably more than 15 kJ/m².

6. The polyamide molding composition as claimed in any of the preceding claims, **characterized in that** the yellowness index of the sheet is less than 3, preferably less than 2.5, and particularly preferably less than 2.

7. The polyamide molding composition as claimed in any of the preceding claims, **characterized in that** the light transmittance of a sheet of thickness 2 mm produced from the transparent homopolyamide and/or copolyamide is at least 90%.

8. The polyamide molding composition as claimed in any of the preceding claims, which is free from photochromic dyes.

9. The polyamide molding composition as claimed in any of the preceding claims, **characterized in that** the solution viscosity (ηᵣₑₗ) of the transparent homopolyamide and/or copolyamide is from 1.3 to 2.0, particularly preferably from 1.40 to 1.90, and/or its glass transition temperature T_{g} is above 90°C, preferably above 110°C, particularly preferably above 130°C.

10. The polyamide molding composition according to any of the preceding claims, **characterized in that** the solution viscosity (ηᵣₑₗ) of the polyesteramide is more than 1.3, preferably more than 1.4, particularly preferably from 1.45 to 2.0.

11. The polyamide molding composition as claimed in any of the preceding claims, **characterized in that** the solution viscosity (ηᵣₑₗ) difference of hompolyamide and/or copolyamide and polyesteramide is less than 0.4, preferably less than 0.3, or less than 0.2.

12. The polyamide molding composition as claimed in any of the preceding claims, **characterized in that** the glass transition temperature of the polyesteramide is less than 40°C, preferably less than 25°C, with particular preference less than 0°C, particularly preferably in the range from (-60) to -(-20)°C.

13. The polyamide molding composition as claimed in any of the preceding claims, **characterized in that** the modulus of elasticity of the polyesteramide is less than 500 MPa, preferably less than 300 MPa, particularly preferably less than 200 MPa.

14. The polyamide molding composition as claimed in any of the preceding claims, **characterized in that** the melting point of the polyesteramide is in the range from 100 to 220°C, preferably from 100 to 180°C, particularly preferably from 100 to 160°C.

15. The polyamide molding composition as claimed in any of the preceding claims, **characterized in that** the polyesteramide is a block copolymer.

16. The polyamide molding composition as claimed in any of the preceding claims, **characterized in that** the polyesteramide is a block copolymer based on a polyamide with a long-chain diol and/or polyesterdiol, preferably a dimerdiol, particularly preferably a C36 dimerdiol.

17. The polyamide molding composition as claimed in claim 16, **characterized in that** the block copolymer also contains dimerdiol dimerate, particularly preferably C36 diol dimerate.

18. The polyamide molding composition as claimed in claim 16 or 17, **characterized in that** the block copolymer also contains an aromatic acid, particularly preferably terephthalic acid.

19. The polyamide molding composition as claimed in any of the preceding claims, **characterized in that** the basis on which the polyesteramide has been formed comprises an amount in the range from 35 to 45% by weight of laurolactam, from 30 to 40% by weight of dimerdiol, preferably C36 dimerdiol, from 5 to 15% by weight of dimerdiol dimerate, particularly preferably C36 diol dimerate, and also from 5 to 15% by weight of terephthalic acid.

20. The polyamide molding composition as claimed in any of the preceding claims, **characterized in that** the proportion present by weight of the transparent homopolyamide and/or copolyamide is from 80 to 98% by weight.

21. The polyamide molding composition as claimed in any of the preceding claims, **characterized in that** the proportion present by weight of the polyesteramide is from 2 to 20% by weight.

22. The polyamide molding composition as claimed in any of the preceding claims, **characterized in that** the proportion present by weight of the polyesteramide is from 5 to 15% by weight.

23. The polyamide molding composition as claimed in any of the preceding claims, **characterized in that** the transparent hompolyamide and/or copolyamide is an amorphous or microcrystalline transparent polyamide with modulus of elasticity of more than 1000 MPa.

24. The polyamide molding composition as claimed in any of the preceding claims, **characterized in that** the transparent homopolyamide and/or copolyamide is a polyamide based on aliphatic, cycloaliphatic, or aromatic diamines, on dicarboxylic acids, on lactams, and/or on aminocarboxylic acids, preferably having from 6 to 36 carbon atoms, or is a mixture of these homopolyamides and/or copolyamides.

25. The polyamide molding composition as claimed in claim 24, **characterized in that** the cycloaliphatic diamines are MACM, IPD and/or PACM, with or without addition or substituents.

26. The polyamide molding composition as claimed in claim 24 or 25, **characterized in that** the aliphatic dicarboxylic acid is an aliphatic dicarboxylic acid having from 2 to 36, preferably from 8 to 20, carbon atoms in linear or branched arrangement, particularly preferably having 10, 12, 14, 16, or 18 carbon atoms.

27. The polyamide molding composition as claimed in any of claims 24 to 26, **characterized in that** the transparent polyamide is a homopolyamide selected from the group of MACM12, MACM14, MACM16, MACM18, PACM12, PACM14, PACM16, PACM18, and/or is a copolyamide selected from the group of MACM12/PACM12, MACM14/PACM14, MACM16/PACM16, MACM18/PACM18, or is a mixture of these polyamides.

28. The polyamide molding composition as claimed in any of claims 24 to 27, **characterized in that** the transparent homopolyamide and/or copolyamide is a polyamide based on aromatic dicarboxylic acids having from 8 to 18, preferably from 8 to 14, carbon atoms, or is a mixture of these homopolyamides and/or copolyamides, preferably based on PXDA and/or MXDA, particularly preferably based on lactams and/or on aminocarboxylic acids, where the aromatic dicarboxylic acids are preferably TPA, naphthalenedicarboxylic acid, and/or IPA.

29. The polyamide molding composition as claimed in claim 28, **characterized in that** the transparent homopolyamide and/or copolyamide is a polyamide selected from the group of: MACM9-18, PACM9-18, MACMI/12, 6I/6T/MACMI/MACMT/12, 3-6T, 6I6T, TMDT, 6I/MACMI/MACMT, 6I/PACMI/PACMT, 6I/6T/MACMI, MACMI/MACM36, 61; 12/PACMI or 12/MACMI, 12/MACMT, 6IPACMT, 6/61, 6/IPDT, or a mixture thereof, where 50 mol% of the IPA can have been replaced by TPA.

30. The polyamide molding composition as claimed in any of the preceding claims, **characterized in that** the additives are stabilizers, such as non-photochromic dyes, e.g. UV absorbers, UV stabilizers, heat stabilizers, lubricants, for example paraffin wax or stearates, fillers, or free-radical scavengers, and/or are processing aids, plasticizers, reinforcing materials, e.g. transparent-dispersion nanoparticles or glass beads or glass fibers and/or are functional additives preferably for influencing optical properties, for example particularly refractive index, or are a combination or mixture thereof.

31. A transparent article with at least one region or one layer composed of a polyamide molding composition as claimed in any of the preceding claims.

32. The article as claimed in claim 31, which is a foil, a molding, a profile, a tube, a hollow body, or an optically variable filter, or an optical lens, and preferably is an ophthalmic lens, and particularly preferably is an element with spectral filter effect, for example in the form of spectacle lens, sun lens, corrective lens, optical filter, ski goggles, visor, safety spectacles, photorecording, display, optical data storage, or window in buildings or in vehicles, or is a decorative element or a structural element, e.g. in the form of a spectacle frame, toy, or in the form of part of a sports shoe, or cover, in particular in the form of a mobile-telephone casing, a part of electronic equipment, a coating, in particular of packaging, of decorative items, or of sports equipment, or cladding, preferably in the automobile sector.

33. The article as claimed in either of claims 31 and 32, which has a color gradient, an antireflective coating, a scratch-resistant coating, an optical-filter coating, a polarizing coating, an oxygen-barrier coating, or a combination of these coatings.

34. The article as claimed in any of claims 31 to 33, **characterized in that** the glass transition temperature of the region or the layer composed of the polyamide molding composition is above 90°C, preferably above 100°C, particularly preferably above 130°C.

35. A process for preparation of a polyamide molding composition as claimed in any of claims 1 to 30, which comprises mixing the homopolyamide and/or copolyamide, and also the polyesteramide in the form of pellets and molding them in an extruder with melt temperatures in the range from 220 to 350°C to give an extrudate and chopping with suitable pelletizers to give pellets, preferably using a melt filter on the extruder to remove contamination from molding compositions for transparent moldings, suitable melt filters being those that can be constructed from sieves in sheet form or in the form of candle filters, with the possibility, during the compounding process, of adding additives which are desirable for modification of the molding composition, e.g. processing stabilizers, color pigments, UV absorbers, heat stabilizers, flame retardants, other transparent polyamides, or nylon-12.

36. A process for production of an article as claimed in any of claims 31 to 34, which comprises molding a polyamide molding composition as claimed in any of claims 1 to 30 in an extrusion process, in an injection-blow-molding process, in an injection-molding process, or in an in-mold-coating process, to give the article.

## Revendications

1. Masse de moulage de polyamide contenant
- au moins un homopolyamide et/ou copolyamide transparent en une proportion pondérale de 70-99% en poids ;
- au moins un autre polymère en une proportion pondérale de 1-30% en poids ; ainsi qu'éventuellement
- d'autres colorants et/ou additifs,
**caractérisée en ce qu'**il s'agit, pour l'autre polymère, d'un polyesteramide et **en ce que** la transmission de la lumière d'une plaque préparée à partir de la masse de moulage de polyamide d'une épaisseur de 2 mm est d'au moins 88%.

2. Masse de moulage de polyamide selon la revendication 1, **caractérisée en ce que** la transmission de la lumière de la plaque est d'au moins 90%, de préférence d'au moins 91%.

3. Masse de moulage de polyamide selon l'une quelconque des revendications précédentes, **caractérisée en ce que** le voile de la plaque est d'au plus 5%, de préférence inférieur à 5%.

4. Masse de moulage de polyamide selon l'une quelconque des revendications précédentes, **caractérisée en ce que** le voile de la plaque est d'au plus 4%, de préférence d'au plus 3%.

5. Masse de moulage de polyamide selon l'une quelconque des revendications précédentes, **caractérisée en ce que** la plaque présente une résilience à l'impact d'au moins 14 kJ/m² , de préférence de plus de 14 kJ/m², en particulier de préférence de plus de 15 kJ/m².

6. Masse de moulage de polyamide selon l'une quelconque des revendications précédentes, **caractérisée en ce que** la plaque présente un indice de jaune inférieur à 3, de préférence inférieur à 2,5 et en particulier de préférence inférieur à 2.

7. Masse de moulage de polyamide selon l'une quelconque des revendications précédentes, **caractérisée en ce que** la transmission de la lumière d'une plaque réalisée à partir de l'homopolyamide et/ou du copolymère transparent d'une épaisseur de 2 mm est d'au moins 90%.

8. Masse de moulage de polyamide selon l'une quelconque des revendications précédentes, **caractérisée en ce qu'**elle est exempte de colorants photochromes.

9. Masse de moulage de polyamide selon l'une quelconque des revendications précédentes, **caractérisée en ce que** l'homopolyamide et/ou le copolyamide transparent présente une viscosité en solution (ηᵣₑₗ) entre 1,3 et 2,0, en particulier de préférence entre 1,40 et 1,90, et/ou une température de transition vitreuse T_{g} supérieure à 90°C, de préférence supérieure à 110°C, en particulier de préférence supérieure à 130°C.

10. Masse de moulage de polyamide selon l'une quelconque des revendications précédentes, **caractérisée en ce que** le polyesteramide présente une viscosité en solution (ηᵣₑₗ) supérieure à 1,3, de préférence supérieure à 1,4, en particulier de préférence entre 1,45 et 2,0.

11. Masse de moulage de polyamide selon l'une quelconque des revendications précédentes, **caractérisée en ce que** la différence de la viscosité en solution (ηᵣₑₗ) de l'homopolyamide et/ou du copolyamide, du polyesteramide est inférieure à 0,4, de préférence inférieure à 0,3 ou inférieure à 0,2.

12. Masse de moulage de polyamide selon l'une quelconque des revendications précédentes, **caractérisée en ce que** le polyesteramide présente une température de transition vitreuse inférieure à 40°C, de préférence inférieure à 25°C, de manière particulièrement préférée inférieure à 0°C, en particulier de préférence dans la plage de (-60)-(-20)°C.

13. Masse de moulage de polyamide selon l'une quelconque des revendications précédentes, **caractérisée en ce que** le polyesteramide présente un module E inférieur à 500 MPa, de préférence inférieur à 300 MPa, en particulier de préférence inférieur à 200 MPa.

14. Masse de moulage de polyamide selon l'une quelconque des revendications précédentes, **caractérisée en ce que** le polyesteramide présente un point de fusion dans la plage de 100 à 220°C, de préférence de 100 à 180°C, en particulier de préférence de 100 à 160°C.

15. Masse de moulage de polyamide selon l'une quelconque des revendications précédentes, **caractérisée en ce que** le polyesteramide est un copolymère à blocs.

16. Masse de moulage de polyamide selon l'une quelconque des revendications précédentes, **caractérisée en ce que** le polyesteramide est un copolymère à blocs à base d'un polyamide présentant un diol à longue chaîne et/ou un polyesterdiol, de préférence un diol dimère, en particulier de préférence un diol dimère en C36.

17. Masse de moulage de polyamide selon la revendication 16, **caractérisée en ce que** le copolymère à blocs contient en outre un dimérate de diol dimère, en particulier de préférence un dimérate de diol en C36.

18. Masse de moulage de polyamide selon l'une quelconque des revendications 16 ou 17, **caractérisée en ce que** le copolymère à blocs contient en outre un acide aromatique, en particulier de préférence de l'acide téréphtalique.

19. Masse de moulage de polyamide selon l'une quelconque des revendications précédentes, **caractérisée en ce que** le polyesteramide est formé à base de, dans la plage de 35-45% en poids de laurolactame, de 30-40% en poids de diol dimère, de préférence de diol dimère en C36, de 5-15% en poids de dimérate de diol dimère, en particulier de préférence de dimérate de diol en C36, ainsi que de 5-15% en poids d'acide téréphtalique.

20. Masse de moulage de polyamide selon l'une quelconque des revendications précédentes, **caractérisée en ce que** l'homopolyamide et/ou le copolyamide transparent se trouve en une proportion pondérale de 80-98% en poids.

21. Masse de moulage de polyamide selon l'une quelconque des revendications précédentes, **caractérisée en ce que** le polyesteramide se trouve en une proportion pondérale de 2-20% en poids.

22. Masse de moulage de polyamide selon l'une quelconque des revendications précédentes, **caractérisée en ce que** le polyesteramide se trouve en une proportion pondérale de 5-15% en poids.

23. Masse de moulage de polyamide selon l'une quelconque des revendications précédentes, **caractérisée en ce qu'**il s'agit, pour l'homopolyamide et/ou le copolyamide transparent d'un polyamide transparent amorphe ou microcristallin présentant un module E supérieur à 1000 MPa.

24. Masse de moulage de polyamide selon l'une quelconque des revendications précédentes, **caractérisée en ce qu'**il s'agit, pour l'homopolyamide et/ou le copolyamide transparent d'un polyamide à base de diamines, d'acides dicarboxyliques, de lactames et/ou d'acides aminocarboxyliques, aliphatiques, cycloaliphatiques ou aromatiques comprenant de préférence 6 à 36 atomes de carbone, ou d'un mélange de ces homopolyamides et/ou copolyamides.

25. Masse de moulage de polyamide selon la revendication 24, **caractérisée en ce qu'**il s'agit, pour les diamines cycloaliphatiques, de MACM, d'IPD et/ou de PACM, avec ou sans substituants supplémentaires.

26. Masse de moulage de polyamide selon la revendication 24 ou 25, **caractérisée en ce qu'**il s'agit, pour l'acide dicarboxylique aliphatique, d'un acide dicarboxylique aliphatique comprenant 2-36, de préférence 8-20 atomes de carbone disposés de manière linéaire ou ramifiée, en particulier de préférence 10, 12, 14, 16 ou 18 atomes de carbone.

27. Masse de moulage de polyamide selon l'une quelconque des revendications 24 à 26, **caractérisée en ce qu'**il s'agit pour le polyamide transparent, d'un homopolyamide choisi dans le groupe MACM12, MACM14, MACM16, MACM18, PACM12, PACM14, PACM16, PACM18 et/ou d'un copolyamide choisi dans le groupe MACM12/PACM12, MACM14/PACM14, MACM16/PACM16, MACM18/PACM18, ou d'un mélange de ces polyamides.

28. Masse de moulage de polyamide selon l'une quelconque des revendications 24 à 27, **caractérisée en ce qu'**il s'agit pour l'homopolyamide et/ou le copolyamide transparent d'un polyamide à base d'acides dicarboxyliques aromatiques comprenant 8 à 18, de préférence 8-14 atomes de carbone ou d'un mélange de ces homopolyamides et/ou copolyamides, de préférence à base de PXDA et/ou de MXDA, en particulier de préférence à base de lactames et/ou d'acides aminocarboxyliques, où il s'agit, pour les acides dicarboxyliques aromatiques de préférence d'acide téréphtalique, d'acide naphtalènedicarboxylique et/ou d'acide isophtalique.

29. Masse de moulage de polyamide selon la revendication 28, **caractérisée en ce qu'**il s'agit, pour l'homopolyamide et/ou le copolyamide transparent, d'un polyamide choisi dans le groupe : MACM9-18, PACM9-18, MACMI/12, 6I/6T/MACMI/MACMT/12, 3-6T, 6I6T, TMDT, 6I/MACMI/MACMT, 6I/PACMI/PACMT, 6I/6T/MACMI, MACMI/MACM36, 6I ; 12/PACMI ou 12/MACMI, 12/MACMT, 6IPACMT, 6/6I, 6/IPDT ou de mélanges de ceux-ci, où 50% en mole de l'acide isophtalique peuvent être remplacés par de l'acide téréphtalique.

30. Masse de moulage de polyamide selon l'une quelconque des revendications précédentes, **caractérisée en ce qu'**il s'agit, pour les additifs, de stabilisateurs, tels que les colorants non photochromes tels que par exemple les absorbants des UV, les stabilisateurs des UV, les stabilisateurs à la chaleur, de lubrifiants tels que par exemple les huiles de paraffine ou les stéarates, de charges, de pièges de radicaux et/ou d'adjuvants de transformation, de plastifiants, de charges renforçantes, telles que par exemple les nanoparticules pouvant être dispersées de manière transparente ou les billes de verre ou les fibres de verre, d'autres polymères et/ou d'additifs fonctionnels, de préférence pour influencer les propriétés optiques, telles qu'en particulier l'indice de réfraction, ou de combinaisons ou de mélanges de ceux-ci.

31. Objet transparent présentant au moins une zone ou une couche constituée par une masse de moulage de polyamide selon l'une quelconque des revendications précédentes.

32. Objet selon la revendication 31, **caractérisé en ce qu'**il s'agit d'une feuille, d'un corps façonné, d'un profilé, d'un tuyau, d'un corps creux ou d'un filtre optiquement variable ou d'une lentille optique, de préférence d'une lentille ophtalmologique, en particulier de préférence d'un élément avec un effet de filtre spectral, tel que par exemple comme verre à lunettes, lentille solaire, lentille de correction, filtre optique, lunettes de ski, lunette, lunettes de protection, dispositif d'enregistrement optique, affichage, enregistreur optique de données, fenêtre de bâtiments et de véhicules, ou d'un élément de décoration ou de structure tel que par exemple comme monture de lunettes, jouet, comme partie d'une chaussure de sport, recouvrement, en particulier comme boîtier de téléphone mobile, partie d'appareils électroniques, revêtement, en particulier d'emballages, articules de sport, appareils de sports, habillages, de préférence dans le domaine automobile.

33. Objet selon l'une quelconque des revendications 31-32, **caractérisé en ce que** l'objet est coloré par gradient, présente un revêtement antireflet, un revêtement de protection contre les griffes, un revêtement de filtre optique, un revêtement polarisant, un revêtement de barrière contre l'oxygène ou des combinaisons de ces revêtements.

34. Objet selon l'une quelconque des revendications 31-33, **caractérisé en ce que** la zone ou la couche en masse de moulage de polyamide présente une température de transition vitreuse supérieure à 90°C, de préférence supérieure à 100°C, en particulier de préférence supérieure à 130°C.

35. Procédé pour la préparation d'une masse de moulage de polyamide selon l'une quelconque des revendications 1-30, **caractérisé en ce que** l'homopolyamide et/ou le copolyamide ainsi que le polyesteramide sont mélangés sous forme de granulat et moulés en un brin dans une extrudeuse à des températures de la masse de 220-350°C et sont coupés avec des granulateurs appropriés en pellets, où, de préférence, les masses de moulage pour des pièces moulées transparentes sont purifiées dans l'extrudeuse avec un filtre à masse fondue, les filtres à masse fondue appropriés pouvant être formés par des tamis sous forme de disque ou sous forme de filtres à bougie, ou où, pendant le compoundage, des additifs peuvent être ajoutés, qui sont souhaités pour l'apprêt de la masse de moulage, tels que par exemple des stabilisateurs de transformation, des pigments colorés, des absorbants des UV, des stabilisateurs à la chaleur, des agents ignifuges, d'autres polyamides transparents ou du polyamide 12.

36. Procédé pour la préparation d'un objet selon l'une quelconque des revendications 31-34, **caractérisé en ce qu'**une masse de moulage de polyamide selon l'une quelconque des revendications 1-30 est moulée dans un procédé d'extrusion, un procédé d'injection-soufflage, un procédé de moulage par injection ou une rétro-injection en un objet.
